Europäisches Patentamt

European Patent Office

Office européen des brevets

(11) Veröffentlichungsnummer: **0 467 491 A1**

## (12) EUROPÄISCHE PATENTANMELDUNG

(21) Anmeldenummer: **91250146.7**

(22) Anmeldetag: **05.06.91**

(51) Int. Cl.⁵: **F15B 15/08**, F15B 15/26

(30) Priorität: **17.07.90 DE 4023058**

(43) Veröffentlichungstag der Anmeldung:
**22.01.92 Patentblatt 92/04**

(84) Benannte Vertragsstaaten:
**AT BE CH DE ES FR GB IT LI NL SE**

(71) Anmelder: **MANNESMANN Aktiengesellschaft**
**Mannesmannufer 2**
**W-4000 Düsseldorf 1(DE)**

(72) Erfinder: **Janetzko, Horst**
**Eichengrund 8**
**W-3100 Celle(DE)**
Erfinder: **Göttling, Helmut**

Fuhrenkamp 3
W-3004 Isernhagen 4(DE)
Erfinder: **Möller, Rudolf**
Knülweg 15 c
W-3007 Gehrden 1(DE)
Erfinder: **Scharnowski, Gerhard**
Im Vogelsang 12
W-3007 Gehrden 1(DE)

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Kolbenstangenloser Arbeitszylinder, insbesondere für kompressible Medien, mit einer Bremseinrichtung.**

㊄ Bei einem kolbenstangenlosen Arbeitszylinder ist die Bremseinrichtung (2) zwischen einem Kraftabnehmer (3) und einem Zylinder-Gehäuse (1) durch Gleitbahnen (5) und Gegengleitbahnen (6) und diese führende Gleitkörper (7) gestaltet. Entsprechend den Gleitkörpern (7) sind die Anstellelemente (12) zur Anstellung eines Gleit- oder Bremsspiels anstellbar. Um eine kompakte Bauweise, eine geringe Bauhöhe sowie eine geringstmögliche Anzahl von Teilen zu erhalten, sind folgende Merkmale vorgesehen:
a) Die Bremseinrichtung (2) ist symmetrisch zu einer Schlitten- bzw. Gehäusemittellängs-Ebene (19) angeordnet,
b) die Bremseinrichtung (2) besitzt ein in einem Bereich (21) wirkendes Kraftglied (20)
c) und ein Hebelelement (22), das mit Hebelarmen (22a,22b) jeweils zentrisch auf den Anstellelementen (12) angreift und an dem eine die Bremskraft erzeugende Anpreßkraft mittig angreift.

Fig.3

Die Erfindung betrifft einen kolbenstangenlosen Arbeitszylinder, insbesondere für kompressible Medien, mit einer Bremseinrichtung zwischen einem Kraftabnehmer, der als Schlitten mit Gleitbahnen ausgebildet ist und einem den Arbeitszylinder aufnehmenden und Gegengleitbahnen bildenden Zylinder-Gehäuse, mit zwischen den Gleitbahnen und Gegengleitbahnen angeordneten Gleitkörpern, die gegen die an Profilseiten des Gehäusequerschnittsprofils angeordneten Gleitbahnen und/oder gegen die Gegengleitbahnen anliegen, mit Anstellelementen, die in Richtung gegen die Gleitkörper zur Einstellung eines Gleit- oder Bremsspiels anstellbar sind.

Derartige kolbenstangenlose Arbeitszylinder mit einer Bremseinrichtung dienen für axiale Bewegungsabläufe, bei denen der Kolben mit dem Kraftabnehmer gegenüber dem Zylinder-Gehäuse angehalten, festgestellt und/oder positioniert wird. Aus diesem Grunde werden derartige kolbenstangenlose Arbeitszylinder mit Bremseinrichtung in pneumatischen Sicherheitseinrichtungen und allgemeinen pneumatischen Anlagen eingesetzt.

Es ist eine Bremseinrichtung für fluidbetriebene kolbenstangenlose Arbeitszylinder bekannt (DE-PS 32 29 305), die angenähert etwa derjenigen eingangs bezeichneten Bremseinrichtung entspricht, die jedoch anstelle der Gleitkörper Zwischen Gleitbahn und Gegengleitbahn innerhalb des Kraftabnehmers einen besonderen Druckkörper besitzt, der mit einem Abdichtungselement arbeitet und bei dem insbesondere außerhalb der Gleitbahnen und Gegengleitbahnen vorgesehene Bremsflächen angeordnet sind.

Die vorliegende Erfindung strebt eine Bremseinrichtung an, mit der hohe Haltekräfte erzeugt werden können und die vor allen Dingen in den Kraftabnehmer integriert werden kann, ohne die äußeren Abmessungen des gesamten Arbeitszylinders unangemessen zu erhöhen.

Die gestellte Aufgabe wird aufgrund des eingang bezeichneten kolbenstangenlosen Arbeitszylinder mit besonderer Gestaltung erfindungsgemäß durch folgende Merkmale gelöst;
a) Die Bremseinrichtung, bestehend aus Gleitkörpern und Anstellelementen, ist jeweils bezogen auf eine Paarung aus Gleitbahn und Gegengleitbahn mit seitlichem Abstand zu einer Schlitten- bzw. Gehäusemittellängs-Ebene angeordnet,
b) die Bremseinrichtung besitzt außerdem in einem oberen Bereich zwischen den Gleitkörpern bzw. den Anstellelementen liegend ein Kraftglied, das in einem Bereich der Gehäusemittellängs-Ebene wirkt
c) und ein Hebelelement, das mit Hebelarmen jeweils zentrisch auf den Anstellelementen angreift und an dem eine die Bremskraft ereugende Anpreßkraft mittig angreift.

Die Integration des Gleit- und Bremsspiels erspart einen größeren Aufwand an Teilen und gestattet außerdem, durch einen sehr flachen Aufsatz die Krafterzeugungselemente für die Bremskraft unterzubringen. Dadurch entsteht eine äußerst kompakte Bauweise des kolbenstangenlosen Arbeitszylinders insgesamt, und es können ausreichend hohe Bremskräfte erzeugt werden, nämlich höhere Kräfte gegenüber dem Stand der Technik. Darüber hinaus ist eine kostengünstige Herstellung möglich, indem ein Arbeitszylinder fertigungstechnisch leicht ohne und mit Bremseinrichtung ausgerüstet werden kann.

In Ausgestaltung der Erfindung ist vorgesehen, daß das Hebelelement aus einem jeweils außen und mittig zur Schlitten- bzw. Gehäusemittellängs-Ebene abgestützten Biegeträger besteht und jeweils zwischen diesen Abstützungen auf den Anstellelementen aufliegt. Auch diese Maßnahmen gewährleisten eine äußerst flache Bauweise und die symmetrische Übertragung von Bremskräften auf die jeweilige Paarung von Gleitbahnen mit Gegengleitbahnen.

Weitere Merkmale der Erfindung bestehen darin, daß die an dem Hebelelement angreifenden Bremskräfte durch ein Druckluftkissen erzeugbar sind. Durch diese Maßnahme entfällt eine durch Verschleiß behaftete Abdichtung mittels eines Abdichtungselementes, wie dieses im Stand der Technik benutzt wird.

Nach anderen Merkmalen ist vorgesehen, daß das Druckluftkissen zwischen dem Hebelelement einerseits und einer Abstützfläche an dem Kraftabnehmer andererseits angeordnet ist. Vorteilhafterweise liegt das Druckluftkissen dadurch gut geführt und geschützt, unbeeinflußt von äußeren Einflüssen, wie Temperatur, Schmutz und dgl. innerhalb des Gerätes.

Weitere Merkmale der Erfindung bestehen darin, daß auf dem Hebelelement mittig eine oder mehrere vorgespannte Blattfedern angreifen und daß das Druckluftkissen zwecks Aufhebung der Bremskraft mittels Druckluft beaufschlagbar ist. Einerseits wird hierdurch das Hebelelement stets in einer Nullstellung gehalten und andererseits stehen für das Druckluftkissen definierte Anlageflächen zur Verfügung. Von besonderem Vorteil ist jedoch, daß entweder die Bremskraft über eine vorgespannte Blattfeder aufgebracht werden kann oder aber über das Druckluftkissen.

Aus diesem Grund ist vorgesehen, daß das Druckluftkissen sich auf einer Seite des Hebelementes und die Blattfeder sich auf der anderen Seite befinden.

Eine weitere Verbesserung der Erfindung besteht darin, daß in der Gehäusemittellängs-Ebene jeweils Einstellschrauben angeordnet sind und mit dem Hebelelement verbunden sind, die mittels eines Klemmrings in Richtung auf das Zylinder-Gehäuse einstellbar und in Gegenrichtung arretierbar ist. Vorteilhafterweise bilden diese Merkmale einen zusätzlichen Spielausgleich. Ausgehend von der praktischen Erfahrung, daß Gleitführungen einem Verschleiß unterworfen sind und aus diesem Grund in gewissen Zeitabständen nachgestellt werden müssen, wenn die Führungsqualität erhalten bleiben soll, vermeidet die gekennzeichnete Lösung dieses Nachstellen und gewährleistet über einen weiten Bereich hin ein immer gleichbleibendes Führungsspiel.

Nach einer weiteren alternativen Ausführungsform der Erfindung ist vorgesehen, daß die Hebelelemente als vorgespanntes Blattfederelement ausgeführt sind, wobei das Druckluftkissen dem Zylinder-Gehäuse zugewendet angeordnet ist. Hier werden also Blattfeder und Hebelelemt zu einem einzigen Teil vereinigt, wobei deren Funktion erhalten bleibt. Bei dieser Gestaltung ist daher die Verminderung der Einzelteile besonders augenfällig.

In Verbesserung der Erfindung ist außerdem vorgesehen, daß das als Blattfederelement ausgebildete Hebelelement auf Kugeln abgestützt ist, die in dem den Gleitkörpern abgewandten Bereich der Anstellelemente gelagert sind.

Ausführungsbeispiele der Erfindung sind in der Zeichnung dargestellt und werden im folgenden näher beschrieben. Es zeigen;

Fig. 1 eine Seitenansicht der Bremseinrichtung, die zusätzlich zu einem kolbenstangenlosen Arbeitszylinder hinzugefügt wird,

Fig. 2 die zu Fig. 1 gehörende Draufsicht,

Fig. 3 einen Querschnitt durch den kolbenstangenlosen Arbeitszylinder mit Bremseinrichtung in einem ersten Ausführungsbeispiel,

Fig. 4 denselben Querschnitt wie Fig. 3 für ein zweites Ausführungsbeispiel,

Fig. 5 denselben Querschnitt wie Fig. 3 für ein drittes Ausführungsbeispiel,

Fig. 6 einen Teil des Querschnitts gemäß Fig. 3 für ein viertes Ausführungsbeispiel.

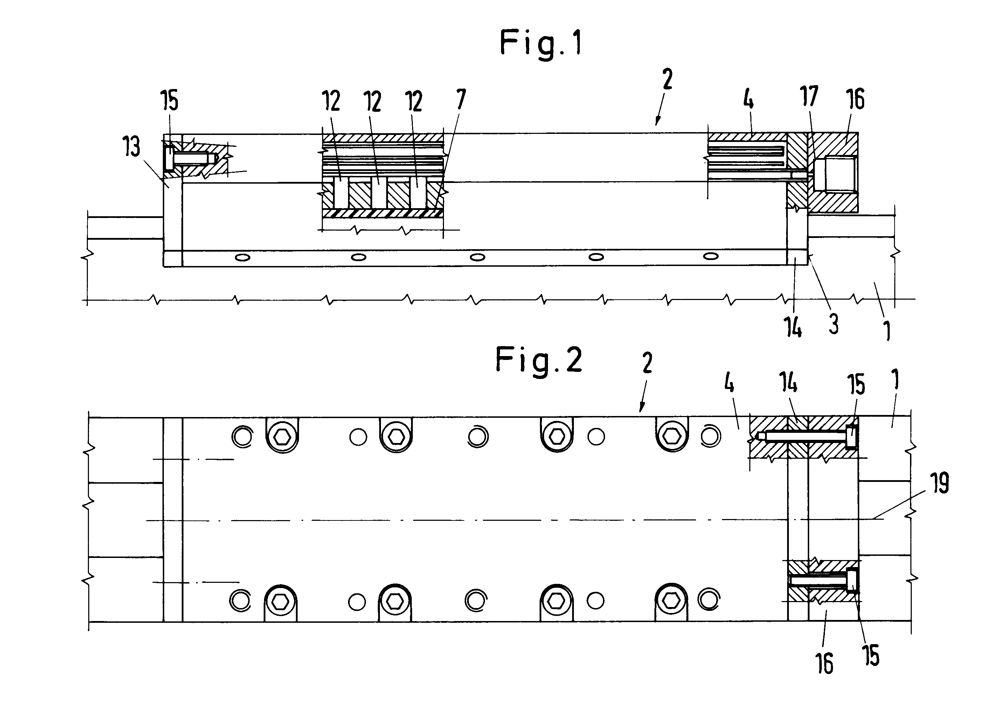

Ein kolbenstangenloser Arbeitszylinder ist in einem Zylinder-Gehäuse 1 untergebracht und arbeitet vorzugsweise mit Druckluft. Über dem Zylinder-Gehäuse 1 befindet sich eine Bremseinrichtung 2 (Fig. 1), deren Einzelteile zwischen einem Kraftabnehmer 3 und einem Gehäusedeckel 4 im wesentlichen unter dem Gehäusedeckel 4 in Flachbauweise angeordnet sind. Der Kraftabnehmer 3 ist als Schlitten 3a ausgebildet. Der Schlitten 3a ist mit Aussparungen 3b versehen, in welche die Gleitkörper 7 eingelegt sind. Das Zylinder-Gehäuse 1 ist mit Gleitbahnen 5 und Gegengleitbahnen 6 ausgebildet, die so zueinander angeordnet sind, daß der Schitten 3a diese umschließt, so daß ein Abheben vermieden wird. Die Gleitkörper 7 werden bei Montage mittels Einstellschrauben 8 und darunter verlaufenden Druckleisten 9 auf ein Spiel eingestellt, aufgrund dessen der Kraftabnehmer 3 als Schlitten 3a hin- und herbewegt werden kann. Dieses Spiel ist daher jeweils zwischen einem Gleitkörper 7 und einer Gegengleitbahn 6 des Gehäusequerschnittprofils 11 einzustellen. Das Spiel wird jedoch erst dann definiert, wenn auch Anstellelemente 12 über die Gleitkörper 7 eingestellt sind, wobei es sich bei dem Spiel um ein Gleitspiel handelt.

Die Bremseinrichtung 2 erstreckt sich (Fig. 1 und 2) über die Länge des Kraftabnehmers 3. An der Bremseinrichtung 2 ist an den Enden des Gehäusedeckels 4 jeweils eine Platte 13 und 14 als Abschluß mittels Schrauben 15 befestigt. Unter den in Reihen angeordneten Anstellelementen 12 befindet sich der Gleitkörper 7. Die Platten 13 und 14 legen die Gleitkörper 7 in Längsrichtung fest. Bei Ausführungsformen, die nachstehend beschrieben sind, ist jeweils ein Medienanschluß 16 vorhanden, dessen Anschlußstutzen 17 das Medium einleitet.

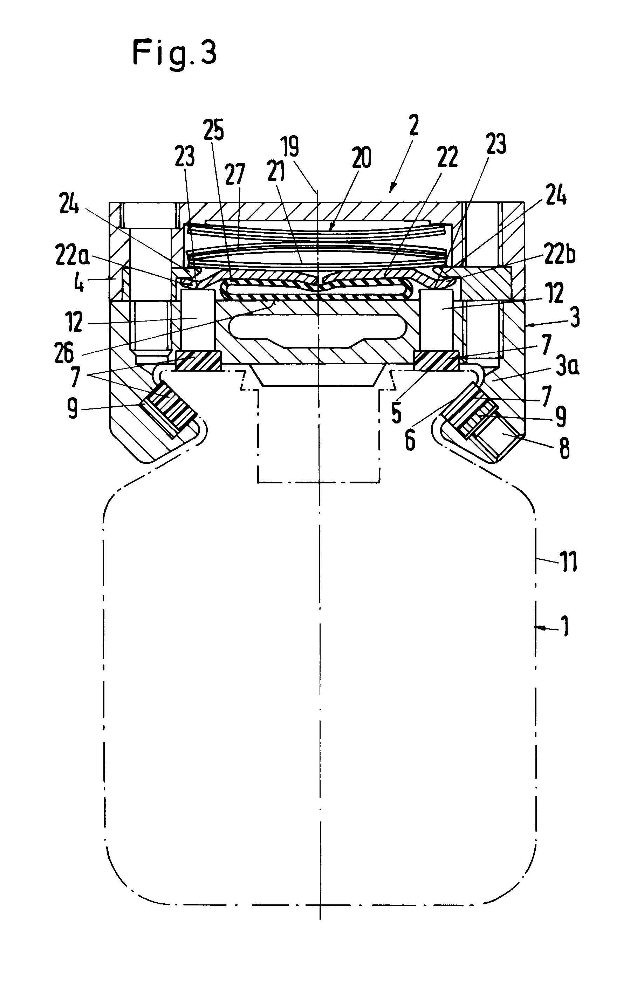

Gemäß einem ersten Ausführungsbeispiel (Fig. 3) arbeitet die Bremseinrichtung 2 mit Federkraft, deren Aufhebung jedoch mit Druckmedien, wie z.B. Druckluft, erfolgt.

Die Bremseinrichtung 2 ist jeweils bezogen auf eine Paarung aus Gleitbahn 5 und Gegengleitbahn 6 symmetrisch zu einer Schlitten- bzw. Gehäusemittellängs-Ebene 19 angeordnet. Die Bremseinrichtung 2 besitzt außerdem ein Kraftglied 20, das in einem mittigen Bereich 21 der Gehäusemittellängs-Ebene 19 wirkt. Ferner ist ein Hebelelement 22 vorgesehen, das mit Hebelarmen 22a und 22b, und zwar jeweils über Vorsprünge 23 jeweils zentrisch auf den Anstellelementen 12 aufliegt, wobei an dem Hebelelement 22 die Bremskraft selbst in Bereich der Gehäusemittellängs-Ebene 19 angreift.

Das Hebelelement 22 bildet somit im Querschnitt einen Biegeträger, der jeweils außen und mittig zur Schlitten- bzw. Gehäusemittellängs-Ebene 19 abgestützt ist und zwischen diesen Abstützungen auf den Anstellelementen 12 aufliegt. Hierbei wird die Abstützung außen vorteilhafterweise durch Vorsprünge 24 des Gehäusedeckels 4 gebildet. Die an dem Hebelelement 22 angreifenden Anpreßkräfte, z.B. eine Klemmkraft, um den Kraftabnehmer 3 stillzusetzen, werden durch ein gemeinsames Druckluftkissen 25 erzeugt. Das Druckluftkissen 25 ist zwischen dem Hebelelement 22 einerseits und einer Abstützfläche 26 auf dem Kraftabnehmer 3 andererseits angeordnet. Auf dem Hebelelement 22 greifen mittig eine oder mehrere vorgespannte Blattfedern 27 an, deren Kraft dadurch aufhebbar ist, daß das Druckluftkissen 25 zwecks Aufhebung der Bremskraft mittels Druckluft beaufschlagbar ist. Soll die Bremskraft wieder auf Null gesetzt werden, ist das Druckluftkissen 25 zu entspannen.

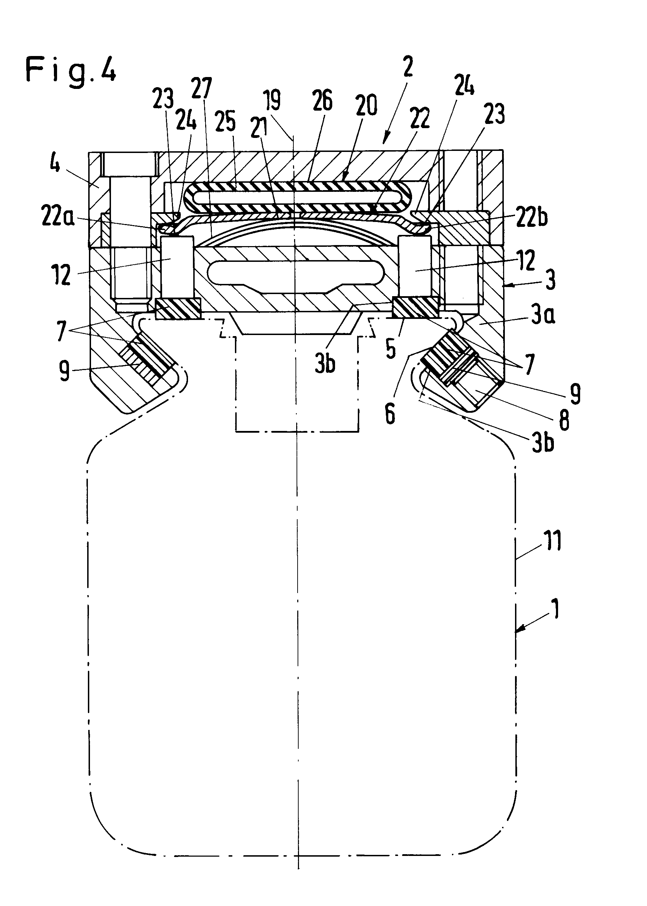

Gemäß einem zweiten Ausführungsbeispiel (Fig. 4) arbeitet die Bremseinrichtung 2 mit Druckluft und das Lösen der Bremse erfolgt durch Druckentlastung. Hier befindet sich das Druckluftkissen 25 auf einer anderen Seite des Hebelementes 22, und die Blattfeder 27 befindet sich auf der gegenüberliegenen Seite. In diesem Fall liegt die Abstützfläche 26 an der Innenseite des Gehäusedeckels 4.

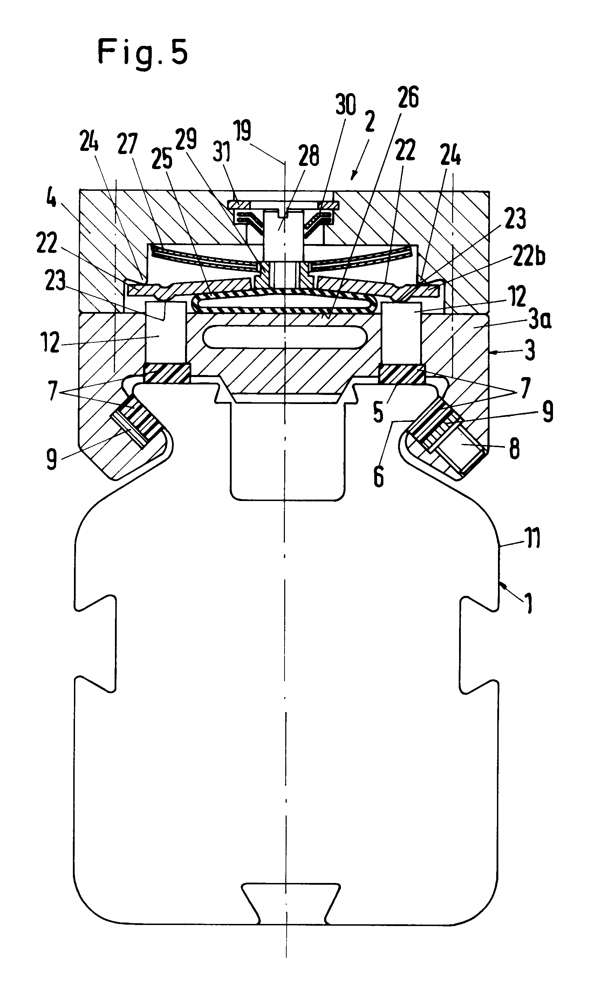

Gemäß einem dritten Ausführungsbeispiel (Fig. 5) ist ein automatischer Spielausgleich vorgesehen. Hierzu dienen in Reihe angeordnete Einstellschrauben 28, die jeweils in eine Mutter 29 ein- und ausschraubbar sind, wobei die Mutter 29 in der Längsachse (Schlitten- bzw. Gehäusemittellängs-Ebene 19) verdrehsicher in die Blattfeder 27 eingesetzt ist. Im Gehäusedeckel 4 sind Klemmringe 30 derart eingesetzt, daß sie nach unten durch einen Ansatz und nach oben durch einen Sicherungsring 31 begrenzt sind, und zwar so, daß sie in axialer Richtung Spiel aufweisen und dabei mit ihrem Innenteil fest auf der Einstellschraube 28 klemmen. Dadurch kann sich die Einstellschraube 28 nach unten bewegen, sie rutscht gewissermaßen durch, während sie in entgegengesetzter Richtung gesperrt ist. Mit dem Spiel zwischen dem Klemmring 30 und dem Sicherungsring 31 wird eine bestimmte Bewegung zugelassen, die auf die Gleitbahn 5/Gegengleitbahn 6 übertragen wird und beim Aufheben der Bremskraft den Öffnungsweg und somit das Führungsspiel auf ein vorgegebenes Maß begrenzt. Tritt Verschleiß ein, dann stellt sich die Einrichtung in der Weise nach, daß die Einstellschrauben 28 in dem Klemmring 30 nach unten durchrutschen.

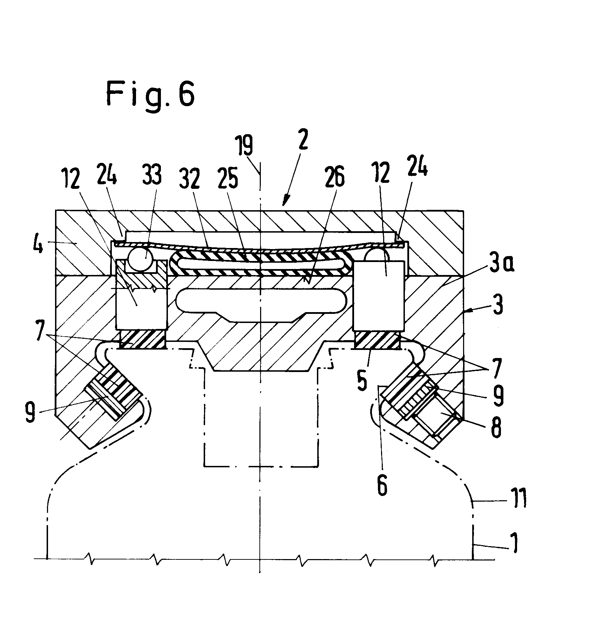

Gemäß einem vierten Ausführungsbeispiel (Fig. 6) ist das Hebelement 22 und die Blattfeder 27 zu einem Blattfederelement 32 vereinigt. Das Druckluftkissen 25 ist dann wieder dem Zylinder-Gehäuse 1 zugewendet angeordnet.

Das als Blattfederelement 32 ausgebildete Hebelement 22 ist auf Kugeln 33 abgestützt, die in dem den Gleitkörpern 7 abgewandten Bereich der Anstellelemente 12 gelagert sind.

## Patentansprüche

1. Kolbenstangenloser Arbeitszylinder, insbesondere für kompressible Medien, mit einer Bremseinrichtung zwischen einem Kraftabnehmer, der als Schlitten mit Gleitbahnen ausgebildet ist und einem den Arbeitszylinder aufnehmenden und Gegengleitbahnen bildenden Zylinder-Gehäuse, mit zwischen den Gleitbahnen und Gegengleitbahnen angeordneten Gleitkörpern, die gegen die an Profilseiten des Gehäusequerschnittsprofils angeordneten Gleitbahnen und/oder gegen die Gegengleitbahnen anliegen, mit Anstellelementen, die in Richtung gegen die Gleitkörper zur Einstellung eines Gleit- oder Bremsspiels anstellbar sind, gekennzeichnet durch folgende Merkmale;

a) die Bremseinrichtung (2), bestehend aus Gleitkörpern (7) und Anstellelementen (12), ist jeweils bezogen auf eine Paarung aus Gleitbahn und Gegengleitbahn (5,6) mit seitlichen Abstand zu einer Schlitten- bzw. Gehäusemittellängs-Ebene (19) angeordnet,

b) die Bremseinrichtung (2) besitzt außerdem in einem oberen Bereich zwischen den Gleitkörpern (7) bzw. den Anstellelementen (12) liegend ein Kraftglied (20), das in einem Bereich (21) der Gehäusemittellängs-Ebene (19) wirkt

c) und ein Hebelement (22), das mit Hebelarmen (22a,22b) jeweils zentrisch auf den Anstellelementen (12) angreift und an dem eine die Bremskraft erzeugende Anpreßkraft mittig angreift.

2. Vorrichtung nach Anspruch 1,
dadurch gekennzeichnet,
daß das Hebelement (22) aus einen jeweils außen und mittig zur Schlitten- bzw. Gehäusemittellängs-Ebene (19) abgestützten Biegeträger besteht und jeweils zwischen diesen Abstützungen auf den Anstellelementen (12) aufliegt.

3. Vorrichtung nach den Ansprüchen 1 oder 2,
dadurch gekennzeichnet,
daß die an dem Hebelement (22) angreifenden Bremskräfte durch ein Druckluftkissen (25) erzeugbar sind.

4. Vorrichtung nach einem oder mehreren der Ansprüche 1 bis 3,
dadurch gekennzeichnet,
daß das Druckluftkissen (25) zwischen dem Hebelement (22) einerseits und einer Abstützfläche (26) an dem Kraftabnehmer (3) andererseits angeordnet ist.

5. Vorrichtung nach einem oder mehreren der Ansprüche 1 bis 4,
dadurch gekennzeichnet,
daß auf dem Hebelement (22) mittig eine oder mehrere vorgespannte Blattfedern (27) angreifen und daß das Druckluftkissen (25) zwecks Aufhebung der Bremskraft mittels Druckluft beaufschlagbar ist.

**6.** Vorrichtung nach einem oder mehreren der Ansprüche 1 bis 5,
dadurch gekennzeichnet,
daß das Druckluftkissen (25) sich auf einer Seite des Hebelelementes (22) und die Blattfeder (27) sich auf der anderen Seite befinden.

**7.** Vorrichtung nach einem oder mehreren der Ansprüche 1 bis 6,
dadurch gekennzeichnet,
daß in der Gehäusemittellängs-Ebene (19) jeweils Einstellschrauben (28) angeordnet sind und mit dem Hebelelement (22) verbunden sind, die mittels eines Klemmrings (30) in Richtung auf das Zylinder-Gehäuse (1) einstellbar und in Gegenrichtung arretierbar ist.

**8.** Vorrichtung nach einem oder mehreren der Ansprüche 1 bis 6,
dadurch gekennzeichnet,
daß die Hebelelemente (22) als vorgespanntes Blattfederelement (32) ausgeführt sind, wobei das Druckluftkissen (25) dem Zylinder-Gehäuse (1) zugewendet angeordnet ist.

**9.** Vorrichtung nach Anspruch 8,
dadurch gekennzeichnet,
daß das als Blattfederelement (32) ausgebildete Hebelelement (22) auf Kugeln (33) abgestützt ist, die in dem den Gleitkörpern (7) abgewandten Bereich der Anstellelemente (12) gelagert sind.

# Fig.1

# Fig.2

EP 0 467 491 A1

# Fig.3

# Fig.4

# Fig. 5

# Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 802 703  (HOWA)<br>* das ganze Dokument *<br>– – – | 1. | F 15 B 15/08<br>F 15 B 15/26 |
| Y | DE-U-8 511 577  (HERION)<br>* das ganze Dokument *<br>– – – | 1. | |
| A | EP-A-0 190 760  (ORIGA)<br>– – – | | |
| A | EP-A-0 136 435  (BOSCH)<br>– – – – – | | |

**RECHERCHIERTE SACHGEBIETE (Int. Cl.5)**

F 15 B

**Der vorliegende Recherchenbericht wurde für alle Patentansprüche erstellt**

| Recherchenort | Abschlußdatum der Recherche | Prüfer |
|---|---|---|
| Den Haag | 22 Juli 91 | KNOPS J. |